# EUROPÄISCHE PATENTSCHRIFT

(11) **EP 1 966 042 B1**
(45) Veröffentlichungstag und Bekanntmachung des Hinweises auf die Patenterteilung: **20.10.2010**
(21) Anmeldenummer: 06828598.0
(22) Anmeldetag: 02.12.2006
(51) Int. Cl.: B64C 1/14

(54) **LUFTFAHRZEUGTÜR-ANORDNUNG SOWIE LUFTFAHRZEUGRUMPF MIT EINER DERARTIGEN LUFTFAHRZEUGTÜR-ANORDNUNG**
AIRCRAFT DOOR ASSEMBLY, AND AIRCRAFT FUSELAGE COMPRISING SUCH AN AIRCRAFT DOOR ASSEMBLY
ENSEMBLE PORTE D'AÉRONEF, ET FUSELAGE D'AÉRONEF POURVU DE CET ENSEMBLE PORTE D'AÉRONEF

(30) Priorität: 19.12.2005 DE 102005061127
(43) Veröffentlichungstag der Anmeldung: 10.09.2008
(73) Patentinhaber: EUROCOPTER DEUTSCHLAND GmbH, 86609 Donauwörth (DE)
(72) Erfinder: OBST, Steffen, 86655 Harburg (DE)
(74) Vertreter: Pouillot, Laurent Pierre Paul
(86) Internationale Anmeldenummer: PCT/DE2006/002143
(87) Internationale Veröffentlichungsnummer: WO 2007/076755

(56) Entgegenhaltungen:
- WO-A-2006/072749
- DE-C1- 19 702 084
- DE-C1- 19 921 326
- US-A1- 3 647 169

## Beschreibung

### TECHNISCHES GEBIET

Die vorliegende Erfindung betrifft eine Luftfahrzeugtür-Anordnung eines Luftfahrzeugs, welches über einen Rumpf mit einer Türöffnung verfügt, die von einem Türrahmen umgeben Ist, umfassend eine in dem Türrahmen anbringbare Luftfahrzeugtür, insbesondere eine Passagiertür. Ferner betrifft die Erfindung einen Luftfahrzeugrumpf mit einer derartigen Luftfahrzeugtür-Anordnung.

### STAND DER TECHNIK

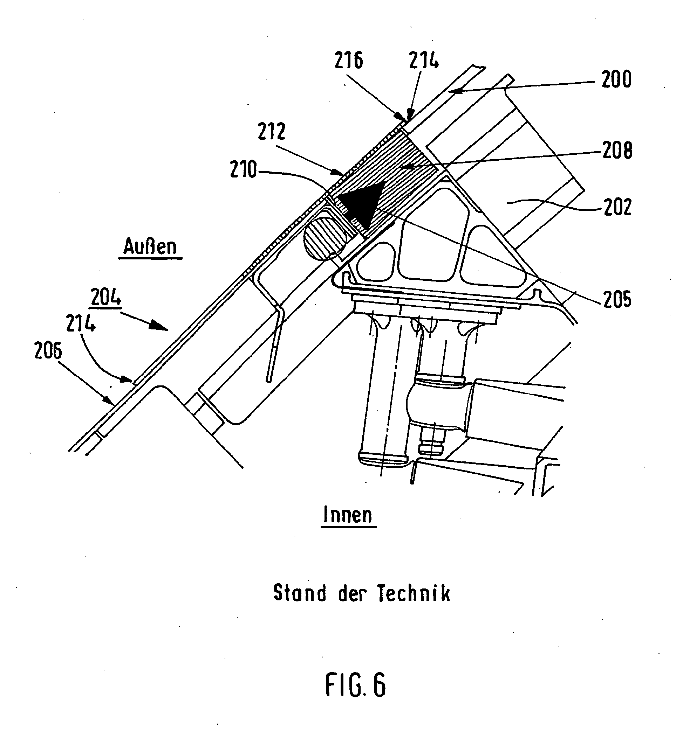

Es ist eine Luftfahrzeugtür-Anordnung eines Luftfahrzeugs bekannt, zum Beispiel in der Druckschrift DE 19921 328 C1, wie sie in einem schematischen Längsschnitt in der Fig. 6 dargestellt ist. Diese vorbekannte Luftfahrzeugtür-Anordnung verfügt über einen Rumpf 200 mit einer Türöffnung, die von einem Türrahmen 202 umgeben ist, und eine in dem Türrahmen 202 anbringbare Luftfahrzeugtür 204, insbesondere eine Passagiertür. Die Luftfahrzeugtür 204 besitzt eine Türstruktur mit einer Außenhaut 206. Die Luftfahrzeugtür 204 ist ausgehend von einer verriegelten Schliesslage in eine entriegelte Schließlage anhebbar und von dort aus in eine außerhalb des Türrahmens 202 und des Rumpfes 200 befindliche Öffnungslage schwenkbar. Die Hubrichtung ist in der Fig. 6 durch einen Pfeil 205 gekennzeichnet, Ferner ist die Luftfahrzeugtür 204 ausgehend von der Öffnungslage zurück in die entriegelte Schließlage schwenkbar und von dort aus wieder in die verriegelte Schließlage absenkbar. In der verriegelten Schließlage ist ein Türspalt 208 (in der Fig. 6 schraffiert dargestellt) zwischen dem Türrahmen 202 und einem oberen Türrand 210 vorhanden. Dieser Türspalt 208 definiert einen Raum für das Anheben und Absenken der Luftfahrzeugtür 204. Die Luftfahrzeugtür 204 besitzt an ihrer Außenseite und an einem dem Türrahmen 202 zugeordneten Türrandbereich ein Türspalt-Abdeckelement 212; welches auf die Außenhaut 206 aufgesetzt und fest mit dieser verbunden ist. Das Türspalt-Abdeckelement 212 erstreckt sich in der verriegelten Schließlage der Luftfahrzeugtür 204 über den Türspalt 208 hinweg auf die Außenseite des Rumpfes 200 und deckt den Türspalt 208 ab.

Der obere und untere Rand des Türspalt-Abdeckelementes 212 liegt hierbei auf der Außenseite des Rumpfes 200 auf, so dass jeweils eine aerodynamisch ungünstige Kante 214 entsteht, die im Flug auch zu einer unerwünschten Geräuschbildung führt.

Das Türspalt-Abdeckelement 212 ist zudem biegeelastisch ausgestaltet, damit es sich in der verriegelten Schließlage eng und fest an die Außenhaut des Rumpfes 200 anlegt. Beim Anheben und Absenken der Luftfahrzeugtür 204 kommt es deshalb häufig zu Beschädigungen des Oberflächenschutzes der Rumpfaußenseite, da der obere Rand 216 des Türspalt-Abdeckelements 212 hierbei an der Außenseite des Rumpfes 200 reibt.

Es sind auch Luftfahrzeugtür-Anordnungen bekannt, die kein Türspalt-Abdeckelement aufweisen, sondern bei denen der Türspalt lediglich mit einem gummielastischen Füllmaterial ausgefüllt ist. Dieses Füllmaterial wird beim Anheben der Tür in die entriegelte Schließlage zusammengedrückt. Wenn die Tür wieder in die verriegelte Schließlage abgesenkt wird, dehnt sich das Füllmaterial wieder aus und verschließt den Türspalt. Bei dieser Lösung weisen die Übergangsbereiche vom Füllmaterial zum Türrahmen bzw. zur Türstruktur jedoch große Unstetigkeitsstellen auf, so dass diese Luftfahrzeugtür-Anordnungen ungünstigere aerodynamische Eigenschaften aufweist. Ferner wird das Füllmaterial beim Öffnen und Schließen der Tür stark beansprucht, verschleißt daher sehr schnell und muss deshalb häufiger ausgetauscht werden.
- Die US-A1 3 647 169 offenbart eine Luftfahrzeugtür-Anordnung für ein Luftfahrzeug, welches über einen Rumpf mit einer Türöffnung verfügt mit einem Türrahmen, der die Türöffnung umgibt und eine in dem Türrahmen anbringbare, im wesentlichen zweiteilige Luftfahrzeugtür, insbesondere eine Passagiertür, die von einer verriegelten Schließlage in eine entriegelte Schließlage anhebbar und von dort aus in eine außerhalb des Türrahmens und des Rumpfes befindliche Öffnungslage schwenkbar ist; und ausgehend von der Öffnungslage zurück in die entriegelte Schließlage schwenkbar und von dort aus in die verriegelte Schließlage absenkbar ist. Die Luftfahrzeugtür weist ein Hauptteil und ein Verriegelungselement auf, das in der verriegelten Schließlage einen Türspalt über dem Hauptteil abdeckt. Das Verriegelungselement ist relativ zum Rumpf beweglich an der Türstruktur befestigt und eine Außenseite des beweglichen Verriegelungselements ist in der verriegelten Schließlage der Tür in eine mit der Außenhaut des Rumpfes bündige Position bringbar.

### DARSTELLUNG DER ERFINDUNG

Der Erfindung liegt die Aufgabe beziehungsweise das technische Problem zugrunde, eine Luftfahrzeugtür-Anordnung zu schaffen, welche die dem Stand der Technik anhaftenden Nachteile möglichst weitgehend vermeidet, über verbesserte aerodynamische Eigenschaften verfügt und den Türspalt zuverlässig und ohne eine Beschädigung des Oberflächenschutzes der Rumpfaußenseite verschließt. Ferner soll ein Luftfahrzeugrumpf mit einer solchen Luftfahrzeugtür-Anordnung bereitgestellt werden.

Diese Aufgabe wird gemäß einem ersten Aspekt gelöst durch eine erfindungsgemäße Luftfahrzeugtür-Anordnung mit den Merkmalen des Patentanspruchs 1.

Diese Luftfahrzeugtür-Anordnung eines Luftfahrzeugs, welches über einen Rumpf mit einer Türöffnung verfügt, die von einem Türrahmen umgeben ist, umfasst bzw. weist eine in dem Türrahmen anbringbare Luftfahrzeugtür, insbesondere eine Passagiertür, auf, die eine Türstruktur mit einer Außenhaut besitzt; diese Luftfahrzeugtür ist ausgehend von einer verriegelten Schließlage in eine entriegelte und zum Öffnen bereite Schließlage anhebbar (oder absenkbar) und von dort aus in eine außerhalb des Türrahmens und des Rumpfes befindliche Öffnungslage schwenkbar ist; ferner ist die Luftfahrzeugtür ausgehend von der Öffnungslage zurück in die entriegelte Schließlage schwenkbar und von dort aus in die verriegelte Schließlage absenkbar (oder anhebbar); in der verriegelten Schließlage ist ein Türspalt zwischen dem Türrahmen und einem Türrand vorhanden, der einen Raum für das Anheben und Absenken der Tür definiert; die Luftfahrzeugtür besitzt an ihrer Außenseite und an einem dem Türrahmen zugeordneten Türrandbereich ein Türspalt-Abdeckelement, welches sich in der verriegelten Schließlage über den Türspalt hinweg auf die Außenseite des Luftfahrzeugsrumpfes erstreckt und den Türspalt abdeckt; das Türspalt-Abdeckelement ist relativ zur Außenseite der Außenhaut beweglich an der Türstruktur befestigt.

Die in dem vorherigen Absatz in Klammern gesetzten Begriffe charakterisieren die kinematische Umkehr des beschriebenen Prinzips.

Bei der erfindungsgemäßen Luftfahrzeugtür-Anordnung kann das Türspalt-Abdeckelement unabhängig von der Tür bewegt werden. Dadurch ist es möglich, das Türspalt-Abdeckelement, noch bevor die Tür in die entriegelte Schließlage angehoben wird, von der Tür und der Anlage am Luftfahrzeugrumpf (bzw. dessen Türrahmen) weg zu bewegen und umgekehrt das Türspalt-Abdeckelement wieder an die Tür und den Luftfahrzeugrumpf (bzw. dessen Türrahmen) anzulegen, wenn sich die Tür bereits in der verriegelten Schließlage befindet. Dies vermeidet nicht nur ungünstige Reibstellen zwischen dem Türspalt-Abdeckelement und schont daher den Oberflächenschutzes der Rumpfaußenseite (bzw. des Türrahmens), sondern gestattet auch, das Türspalt-Abdeckelement bündig und aerodynamisch günstiger in die Außenkontur der Tür, des Luftfahrzeugrumpfes und dessen Türrahmen zu integrieren. Nachteilige Kanten an dem Übergangsbereich zwischen dem Türspalt-Abdeckelement und der Außenkontur des Rumpfes sowie der Tür sind hierbei nicht vorhanden. Dadurch werden die aerodynamischen Eigenschaften der Luftfahrzeugtür-Anordnung insgesamt verbessert, eine unerwünschte Geräuschbildung wird vermieden, und der Türspalt ist zuverlässig und ohne eine Beschädigung des Oberflächenschutzes der Rumpfaußenseite verschließbar.

Grundsätzlich kann das Türspalt-Abdeckelement jedoch auch von der Tür und der Anlage am Luftfahrzeugrumpf (bzw. dessen Türrahmen) weg bewegt werden, während die Tür bereits von der verriegelten Schließlage in die entriegelte Schließlage angehoben bzw. während die Tür entriegelt wird. Ebenso kann das Türspalt-Abdeckelement wieder an die Tür und den Luftfahrzeugrumpf (bzw. dessen Türrahmen) angelegt werden, noch während die Tür von der entriegelten Schließlage in die verriegelte Schließlage abgesenkt bzw. während die Tür verriegelt wird. Um zu vermeiden, dass das Türspalt-Abdeckelement bei diesen beiden Vorgängen mit dem Türrahmen bzw. dem Rumpf kollidiert bzw. den Oberflächenschutz an der Rumpfaußenseite durch Reiben beschädigt, sind die jeweiligen Anfangszeitpunkte der Bewegung des Türspalt-Abdeckelementes genau auf die jeweilige Türsequenz und die Anfangs- und Ehdzeitpunkte des Anhebens, Absenkens bzw. Entriegelns, Verriegelns abzustimmen.

Weitere bevorzugte und vorteilhafte Ausgestaltungsmerkmale der erfindungsgemäßen Luftfahrzeugtür-Anordnung sind Gegenstand der Unteransprüche 2 bis 17.

Die der Erfindung zugrunde liegende Aufgabe wird gemäß einem zweiten Aspekt gelöst durch einen erfindungsgemäßen Luftfahrzeugrumpf mit den Merkmalen der Ansprüche 18 bis 21.

Dieser Luftfahrzeugrumpf, der insbesondere mit einer Druckkabine versehen ist, umfasst eine Luftfahrzeugtür-Anordnung nach einem der Ansprüche 1 bis 17. Der erfindungsgemäße Luftfahrzeugrumpf ist vorzugsweise als Rumpf eines Tragflächenflugzeugs, insbesondere eines Passagierflugzeugs, ausgestaltet. Ebenso kann der erfindungsgemäße Luftfahrzeugrumpf jedoch auch als Rumpf eines Drehflügelflugzeugs, insbesondere eines Hubschraubers, ausgebildet sein.

Mit dem erfindungsgemäßen Luftfahrzeugrumpf sind im Wesentlichen die gleichen Vorteile erzielbar, die bereits weiter oben in Zusammenhang mit der erfindungsgemäßen Luftfahrzeugtür-Anordnung erläutert wurden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Längsschnittansicht durch eine in einem ersten Zustand befindliche erfindungsgemäße Luftfahrzeugtür-Anordnung gemäß einer ersten Ausführungsform;
- Fig. 2: eine schematische Längsschnittansicht der erfindungsgemäßen Luftfahrzeugtür-Anordnung von Fig. 1 in einem zweiten Zustand;
- Fig. 3: eine schematische Draufsicht auf die erfindungsgemäße Luftfahrzeugtür-Anordnung von Fig. 1 und 2 in einer Blickrichtung entsprechend dem Pfeil III in Fig. 1;
- Fig. 4: eine schematische, perspektivische Draufsicht auf die erfindungsgemäße Luftfahrzeugtür-Anordnung von Fig. 1 bis 3 in einer Blickrichtung entsprechend dem Pfeil III in Fig. 1, mit weiteren Details;
- Fig. 5: eine schematische Längsschnittansicht durch eine erfindungsgemäße Luftfahrzeugtür-Anordnung gemäß einer zweiten Ausführungsform; und
- Fig. 6: eine schematische Längsschnittansicht durch eine Luftfahrzeugtür- Anordnung gemäß dem Stand der Technik.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich oder sinnvoll ist.

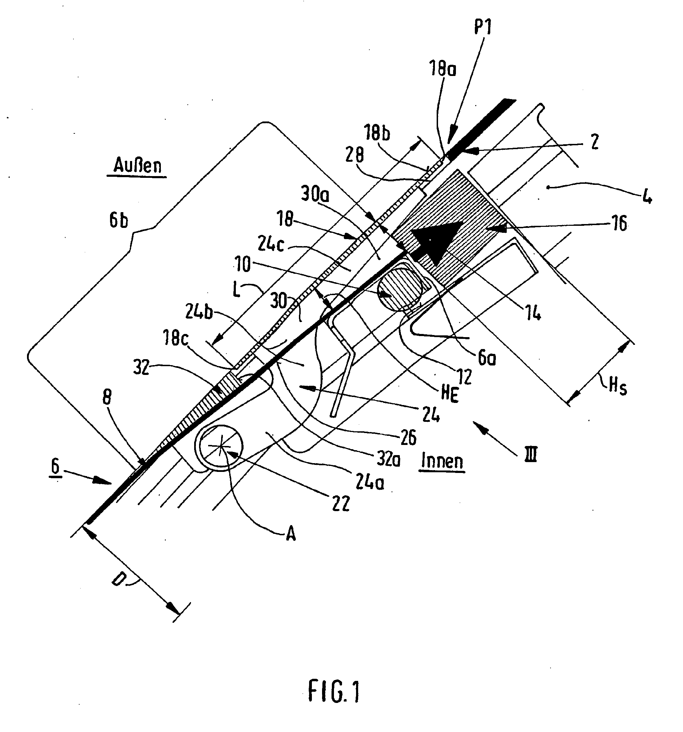

Fig. 1 zeigt eine schematische Längsschnittansicht durch eine in einem ersten Zustand befindliche erfindungsgemäße Luftfahrzeugtür-Anordnung gemäß einer ersten Ausführungsform. Diese Luftfahrzeugtür-Anordnung ist im vorliegenden Beispiel Bestandteil eines mit einer Druckkabine versehenen Rumpfes 2 eines Tragflächenflugzeugs. Der Rumpf 2 verfügt über eine in die Druckkabine mündende Türöffnung, die von einem Türrahmen 4 umgeben ist. Die Luftfahrzeugtür-Anordnung weist eine als Passagiertür und sogenannte Plug-In-Door ausgestaltete Luftfahrzeugtür 6 (nachfolgend kurz Tür 6 genannt) auf, die in bzw. an dem Türrahmen 4 anbringbar ist. Die Tür 6 besitzt eine Türstruktur mit Verstärkungselementen und einer Außenhaut 8. Ferner ist die Tür 6 mit einer umlaufenden Dichtung 10 ausgestattet, mit der die Tür 6 gegenüber einer Anlagefläche 12 des Türrahmens 4 und damit gegenüber dem Inneren der Druckkabine abdichtbar ist.

Die Tür 6 ist ausgehend von einer verriegelten Schließlage, wie sie in der Fig. 1 als erster Zustand der Tür 6 dargestellt ist, in eine entriegelte Schließlage, in der die Tür 6 zum Öffnen bereit ist, anhebbar. In der Fig. 1 ist die Hubrichtung der Tür 6 mit einem Pfeil 14 markiert. Von der entriegelten Schließlage aus ist die Tür 6 dann in eine außerhalb des Türrahmens 4 und des Rumpfes 2 befindliche Öffnungslage schwenkbar. Ferner ist die Tür 6 ausgehend von der Öffnungslage zurück in die entriegelte Schließlage schwenkbar und von dort aus wieder in die verriegelte Schließlage absenkbar. Die Türhöhe ist in Bezug zu der lichten Innenhöhe des Türrahmens 4 derart ausgestaltet, dass in der verriegelten Schließlage ein Türspalt 16 zwischen dem Türrahmen 4 und einem oberen Türrand 6a vorhanden ist. Der Türspalt 16, der in der Zeichnung mit einer Schraffur gekennzeichnet ist, definiert einen Raum für das Anheben und Absenken der Tür 6.

Wie aus der Fig. 1 des Weiteren hervor geht, besitzt die Tür 6 an ihrer Außenseite und an einem dem Türrahmen 4 zugeordneten Türrandbereich ein bewegliches Türspalt-Abdeckelement 18, welches sich in der in Fig. 1 gezeigten verriegelten Schließlage über den Türspalt 16 hinweg auf die Außenseite des Rumpfes 2 bzw. dessen Türrahmen 4 erstreckt und den Türspalt 16 abdeckt. In diesem Zustand befindet sich das Türspalt-Abdeckelement 18 in einer ersten Abdeckelement-Position P1. Die Breite des Türspalt-Abdeckelementes 18 entspricht zweckmäßiger Weise mindestens der Breite der Tür 6 bzw. ihres Türspaltes 16. Die in Höhenrichtung der Tür 6 bzw. des Türspaltes 16 gemessene Länge L des Türspalt-Abdeckelementes 18 ist größer als die Türspalthöhe H_{S}. Das Verhältnis H_{S}/L von Türspalthöhe H_{S} zur Länge L des Türspalt-Abdeckelementes 18 liegt vorzugsweise in einem Bereich von 1:10 bis 1:1,1, insbesondere 1:10 bis 1:5, insbesondere 1:6 bis 1:3,5. Im vorliegenden Fall beträgt das Verhältnis H_{S}/L ca. 1:3, wobei sich nur das ca. obere Drittel des Türspalt-Abdeckelementes 18 über den Türspalt 16 erstreckt.

Wie in der Fig. 1 erkennbar, ist das bewegliche Türspalt=Abdeckelement 18 plattenförmig ausgebildet. Als Material für das Türspalt-Abdeckelement 18 eignen sich insbesondere Leichtmetallplatten, zum Beispiel aus einer Aluminiumlegierung, oder auch Faserverbundwerkstoff-Platten, wobei letztere sowohl einen monolithischen als auch einen sandwichartigen Aufbau besitzen können. In dem in Fig. 1 gezeigten Längsschnitt der Luftfahrzeugtür-Anordnung ist das plattenförmige Türspalt-Abdeckelement 18 leicht gekrümmt. Diese Krümmung ist der Krümmung der Tür 6 bzw. des Rumpfes 2 an dieser Stelle angepasst. Da Luftfahrzeug-Rümpfe, insbesondere solche, die mit Druckkabinen ausgestattet sind, einen annähernd kreisförmigen oder auch ovalen Rumpfquerschnitt bzw. Rumpfteilbereiche mit einer entsprechend gekrümmten Formgebung besitzen, ist folglich auch die Tür 6 und deren Türspalt-Abdeckelement 18 dieser Formgebung anzupassen.

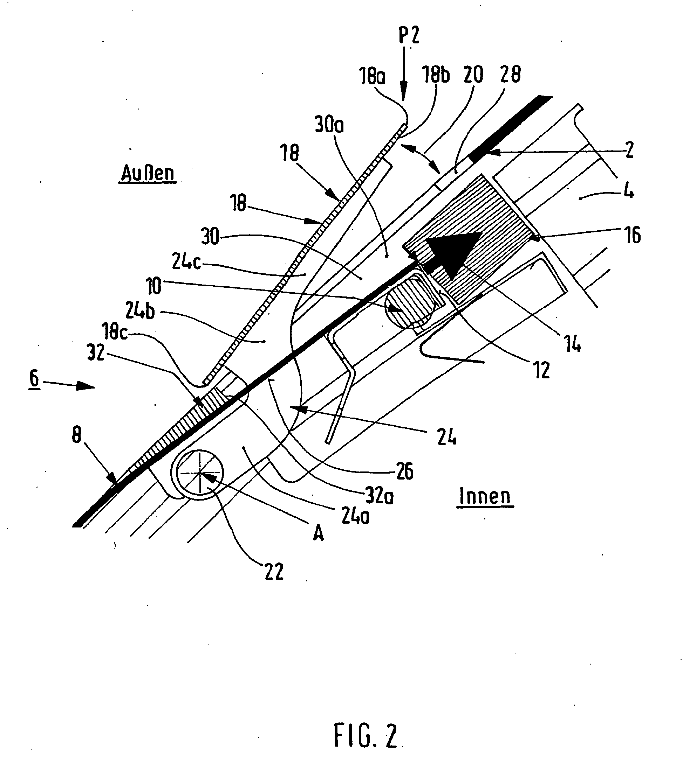

Fig. 2 zeigt eine schematische Längsschnittansicht der erfindungsgemäßen Luftfahrzeugtür-Anordnung von Fig. 1 in einem zweiten Zustand. In diesem Zustand ist das bewegliche Türspalt-Abdeckelement 18 ausgehend von der in Fig. 1 skizzierten ersten Abdeckelement-Position P1, in der sich die Tür 6 in der verriegelten Schließlage befindet (erster Zustand), von der Außenseite der Außenhaut 8 weg in eine zweite Abdeckelement-Position P2 beweglich, so dass die Tür 6 dann zum Entriegeln anhebbar ist. Ausgehend von der zuvor genannten zweiten Abdeckelement-Position P2 und einem Zustand, in der sich die Tür 6 in der entriegelten Schließlage (zweiter Zustand) befindet, ist das bewegliche Türspalt-Abdeckelement 18 dann wieder zu der Außenseite der Außenhaut 8 hin in die erste Abdeckelement-Position P1 beweglich. Die Tür 6 ist dann zum Verriegeln bzw. Absenken bereit. Diese Bewegbarkeit des Türspalt-Abdeckelementes 18 ist in der Fig. 2 durch einen Doppelpfeil 20 angedeutet.

Um das Türspalt-Abdeckelement 18 auf die zuvor beschriebene Art und Weise bewegen zu können, ist die erfindungsgemäße Luftfahrzeugtür-Anordnung mit einer Betätigungseinrichtung zum Bewegen des beweglichen Türspalt-Abdeckelementes 18 ausgerüstet. Im vorliegenden Fall ist diese Betätigungseinrichtung zumindest teilweise innerhalb der Türstruktur angeordnet und funktional mit einer Verriegelungseinrichtung zum Verriegeln und Entriegeln der Tür 6 gekoppelt. Die Verriegelungseinrichtung besitzt einen Verriegelungsmechanismus, von dem in den Fig. 1 und 2 eine Welle 22 zu erkennen ist. Diese funktional mit der Verriegelungseinrichtung gekoppelte Betätigungseinrichtung bewegt das Türspalt-Abdeckelement 18 vor (bzw. während) dem Anheben bzw. Entriegeln der Tür 6 in die zweite Abdeckelement-Position P1. Ferner bewegt sie das bewegliche Türspalt-Abdeckelement 18 nach dem Verriegeln (bzw. beim Verriegeln) der Tür 6 wieder in die erste Abdeckelement-Position P1 zurück.

Aufgrund dieser funktionalen Koppelung mit der Welle 22 des Verriegelungsmechanismus kann eine separate bzw. zusätzliche Betätigungseinrichtung, die ausschließlich zur Bewegung des Türspalt-Abdeckelementes 18 dient, vermieden werden. Statt dessen übernimmt ein Teil der Verriegelungseinrichtung die Betätigung des Türspalt-Abdeckelementes 18 und übt damit eine vorteilhafte Mehrfachfunktion aus. Somit lassen sich auch konventionelle Türkonstruktionen mit geringem Aufwand auf das erfindungsgemäße System umrüsten. Die funktionale Koppelung stellt darüber hinaus sicher, dass die Bewegung des Türspalt-Abdeckelementes 18 mit dem Vorgang des Anhebens/Entriegelns bzw. AnsenkensNerriegelns der Tür 6 entsprechend synchronisiert erfolgt. Dies verhindert, dass der obere Rand 18a des Türspalt-Abdeckelementes 18 beim Anheben/Entriegeln der Tür 6 gegen den Türrahmen 4 bzw. den Rumpf 2 stößt, da das Türspalt-Abdeckelement 18 rechtzeitig vor dem Anheben/Entriegeln bzw. noch rechtzeitig während dieses Vorgangs in die zweite Abdeckelement-Position P2 geschwenkt wird. Die Betätigung des Türspalt-Abdeckelementes 18 kann in Abhängigkeit der Betätigung der Verriegelungseinrichtung somit kontrolliert und mit der Betätigung der Verriegelungseinrichtung und dem Anheben/Absenken bzw. Entriegeln/Verriegeln der Tür entsprechend synchronisiert erfolgen.

Je nach Art und Weise der funktionalen Koppelung der Betätigungseinrichtung mit der Verriegelungseinrichtung ist es auch möglich, das Türspalt-Abdeckelement 18 noch während des Anhebens bzw. Entriegelns der Tür 6 in die zweite Abdeckelement-Position P2 zu bewegen (siehe oben).

Die Betätigungseinrichtung weist mindestens ein an dem beweglichen Türspalt-Abdeckelement 18 angreifendes Betätigungselement auf, mit welchem das Türspalt-Abdeckelement 18 bewegbar ist. Im vorliegenden Ausführungsbeispiel ist das mindestens eine Betätigungselement als ein Schwenkhebel 24 ausgestaltet. Und das bewegliche Türspalt-Abdeckelement 18 ist als ein klappenartiges, um eine Schwenkachse A relativ zur Außenseite der Außenhaut 8 verschwenkbares Element ausgebildet, wie in den Fig. 1 und 2 gut zu erkennen ist. Die Schwenkachse A liegt hierbei in der Nähe des dem Türspalt 16 abgewandten Endes des Türspalt-Abdeckelementes 18, innerhalb der Türstruktur und in der Nähe der Innenseite der Außenhaut 8. Die Schwenkachse A wird im vorliegenden Fall durch die Drehachse der Welle 22 gebildet, die drehfest mit dem Schwenkhebel 24 verbunden ist. In diesem Beispiel bildet also ein Teil der Verriegelungseinrichtung gleichzeitig einen Teil der Betätigungseinrichtung.

Wie insbesondere aus den Fig. 1 und 2 hervor geht, ist der Schwenkhebel 24 stufenartig abgewinkelt, wobei sich ein erster Schwenkhebelabschnitt 24a in dem in Fig. 1 gezeigten Zustand entlang der Innenseite der Außenhaut 8 erstreckt. Ein sich an den ersten Schwenkhebelabschnitt 24a anschließender zweiter Schwenkhebelabschnitt 24b ist in der Fig. 1 nach links zu dem Türspalt-Abdeckelement 18 hin abwinkelt und tritt durch eine in der Außenhaut 8 vorgesehene Durchgangsöffnung 26 durch die Außenhaut 8 hindurch. Der aus der Außenhaut 8 ragende Teil des zweiten Schwenkhebelabschnitts 24b erstreckt sich bis zum beweglichen Türspalt-Abdeckelement 18. Mit anderen Worten erstreckt sich das Betätigungselement von der Innenseite der Tür 6 her durch die Durchgangsöffnung 26 in der Außenhaut 8 durch diese hindurch zum beweglichen Türspalt-Abdeckelement 18.

Ein sich an dem zweiten Schwenkhebelabschnitt 24b anschließender dritter Schwenkhebelabschnitt 24c wiederum ist in der Fig. 1 nach rechts oben abgewinkelt und erstreckt sich im Wesentlichen entlang der Außenseite der Außenhaut 8 sowie entlang der Unterseite des Türspalt-Abdeckelementes 18 bis kurz vor dessen oberen Rand 18a und lässt an dem Türspalt-Abdeckelement 18 einen oberen Randbereich 18b frei. Der so geformte Schwenkhebel 24 ist im Bereich des zweiten und dritten Schwenkhebelanschnitts 24b, 24c fest mit dem Türspalt-Abdeckelement 18 verbunden. Der Schwenkhebel 24 bildet gleichzeitig eine Trag- oder Stützstruktur, die das Türspalt-Abdeckelement 18 trägt und hält. Der Schwenkhebel 24 und Türspalt-Abdeckelement 18 können entweder als Einheit bzw. integral ausgebildet (Integralbauweise) oder aber auch durch die Verbindung von zwei oder mehreren separaten Bauteilen (Differentialbauweise) hergestellt sein.

Aus der Fig. 1 ist des Weiteren ersichtlich, dass die Außenseite des beweglichen Türspalt-Abdeckelementes 18 in der verriegelten Schließposition der Tür 6 bzw. in der ersten Abdeckelement-Position P1 bündig mit der idealen Außenkontur bzw. Soll-Außenkontur des Rumpfes 2 und der Außenkontur bzw. Soll-Außenkontur der Tür 6 ist. Um dies zu ermöglichen, besitzt der Rumpf 2 bzw. dessen Türrahmen 4 an seiner Außenseite eine Einbuchtung 28, in die in der verriegelten Schließposition der Tür 6 bzw. in der ersten Abdeckelement-Position P1 der dem Türrahmen 4 zugeordnete obere Randbereich 18b des beweglichen Türspalt-Abdeckelementes 18 bündig mit der Soll-Außenkontur des Rumpfes 2 positionierbar ist.

Im vorliegenden Beispiel ist diese Einbuchtung 28 durch einen abgestuften Rand des Türrahmens 4 geformt. Zwischen der Unterseite des Randbereichs 18b und einem Boden bzw. einem Abschnitt der Einbuchtung 28, welcher diesem Randbereich 18b zugewandt ist, kann ein Zwischenelement (nicht gezeigt) angeordnet sein. Diese Zwischenelement ist z.B. am Türspalt-Abdeckelement 18 oder an der Einbuchtung 28 zu befestigen. Es kann z.B. als Abstandshalter, als Dämpfungselement beim Anlegen des Türspalt-Abdeckelementes 18 an den Rumpf 2 bzw. Einbuchtung 28 oder aber auch als Dichtung zum Abdichten des - wenn auch nur kleinen - Spaltes zwischen dem oberen Rand 18a des Türspalt-Abdeckelementes 18 und dem Rumpf 2 bzw. dessen Türrahmen 4 dienen.

Bei Betrachtung der erfindungsgemäßen Luftfahrzeugtür-Anordnung in dem in den Fig. 1 und 2 gezeigten, in Höhenrichtung der Tür 6 verlaufenden Längsschnitt ist erkennbar, dass die Luftfahrzeugtür-Anordnung einem dem Türspalt 16 zugeordneten Türrandbereich 6b besitzt; in dem die Außenhaut 8 bezogen auf die vorbestimmte Soll-Außenkontur der Tür 6 bzw. bezogen auf eine im Bereich der Tür 6 vorbestimmte Soll-Außenkontur des Flugzeugrumpfes 2 zur Türinnenseite hin versetzt, abgewinkelt bzw. verformt ist. Und das bewegliche Türspalt-Abdeckelement 18 ist über diesem nach innen versetzten Türrandbereich 6b angeordnet. Auf diese Weise entsteht in diesem Türrandbereich 6b zwischen der Soll-Außenkontur auf der einen Seite und der Außenseite der nach innen versetzten Außenhaut 8 auf der anderen Seite ein relativ flacher, hier im Wesentlichen keilförmiger Einbauraum 30, der sich in Richtung zum Türrahmen 4 hin erweitert und primär zur Aufnahme des beweglichen Türspalt-Abdeckelementes 18 dient. Obwohl der Übergang von der sich zunächst entlang der Soll-Außenkontur erstreckenden Außenhaut 8 zu dem nach innen hin versetzten Türrandbereich 6b im vorliegenden Beispiel allmählich erfolgt, kann grundsätzlich auch ein abrupterer Übergang realisiert werden, zum Beispiel über eine Abstufung in der Außenhaut 8. Ein allmählicher Übergang ist in der Regel jedoch bevorzugt.

Das Verhältnis H_{E}/D zwischen der in Türdickenrichtung gemessenen mittleren Höhe H_{E} des Einbauraumes 30 und der Dicke D der Tür 6 in einem oberen, den Türrandbereich 6b nicht umfassenden Türabschnitt, liegt vorzugsweise in einem Bereich von 1:12 bis 1:4, insbesondere 1:10 bis 1:6, insbesondere 1:8 bis 1:5, insbesondere 1: 6 bis 1:4. Im vorliegenden Ausführungsbeispiel beträgt das Verhältnis H_{E}ID ca. 1:8,5.

Obwohl der Einbauraum 30 grundsätzlich so ausgestaltet werden kann, dass er in dem in Fig. 1 gezeigten Zustand im Wesentlichen vollständig von dem beweglichen Türspalt-Abdeckelement 18 ausgefüllt ist, ist es doch bevorzugt, dass in der ersten Abdeckelement-Position P1 zwischen der Innenseite des beweglichen Türspalt-Abdeckelementes 18 und der Außenseite der in dem nach innen versetzten Türrandbereich 6b befindlichen Bereiche der Außenhaut 8 ein Zwischenraum 30a verbleibt. In diesem Zwischenraum 30a erstreckt sich im vorliegenden Beispiel ein Teil des zweiten Schwenkhebelabschnitts 24b sowie der dritte Schwenkhebelabschnitt 24c. Auf diese Weise kann der Schwenkhebel 24 die oben beschriebene Trag- oder Stützfunktion ausüben, und die Durchgangsöffnung 26, durch die sich der Schwenkhebel 24 hindurch erstreckt, kann klein ausgebildet werden.

Wie in den Fig. 1 und 2 skizziert, ist in dem unteren, spitz zulaufenden Bereich des Einbauraums 30 und zwischen einem der Tür 6 zugeordneten unteren Randbereich 18c des beweglichen Türspalt-Abdeckelementes 18 und einem an diesen Randbereich 18c angrenzenden Bereich der Außenhaut 8 ein keilförmiges Verkleidungselement 32 vorgesehen, welches diesen Abschnitt des Einbauraums 30 ausfüllt. Auf diese Weise wird an dieser Stelle die vorbestimmte Soll-Außenkontur der Tür 6 definiert. Gleichzeitig wird das Türspalt-Abdeckelement 18 in der in Figur 1 gezeigten ersten Abdeckelement-Position P1 an seinem unteren Rand 18c aerodynamisch günstig verkleidet. Das Verkleidungselement 32 kann sich mit seinem dem Türspalt-Abdeckelement 18 zugewandten oberen Rand 32a auch teilweise unterhalb das Türspalt-Abdeckelement 18 erstrecken. Somit kann das Verkleidungselement 32 gleichzeitig als Anlagefläche und/oder Dichtungselement für den unteren Randbereich 18c des Türspalt-Abdeckelementes 18 fungieren.

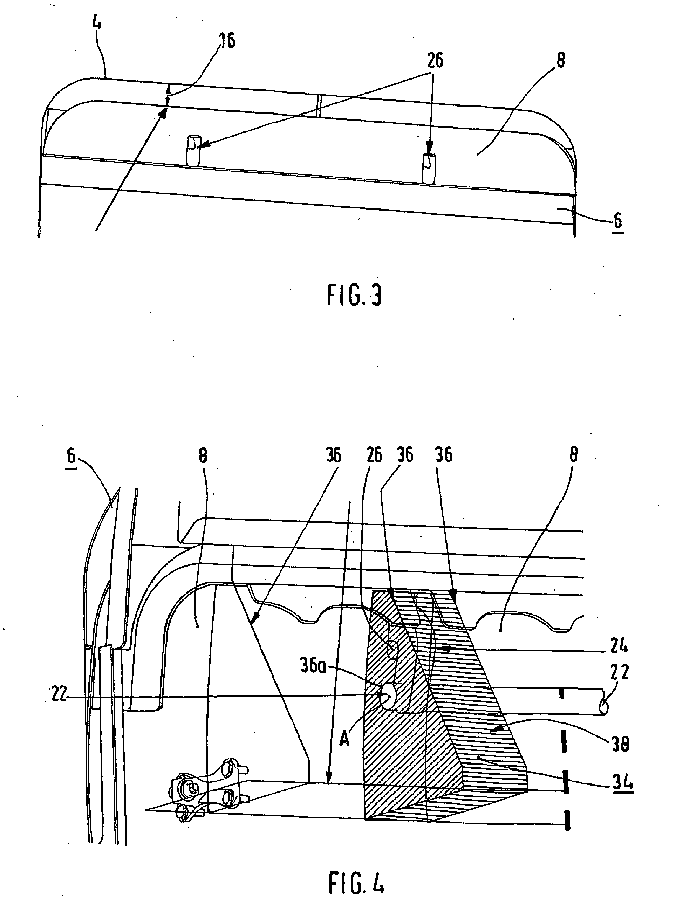

In der Fig. 3, die eine schematische Draufsicht auf die erfindungsgemäße Luftfahrzeugtür-Anordnung von Fig. 1 und 2 in einer Blickrichtung entsprechend dem Pfeil III in Fig. 1 zeigt, sind weitere Einzelheiten der erfindungsgemäßen Luftfahrzeugtür-Anordnung gemäß der ersten Ausführungsform erkennbar. So zeigt die Fig. 3 zwei voneinander in Breitenrichtung der Tür 6 voneinander beabstandete Durchgangsöffnungen 26, durch die sich jeweils ein Schwenkhebel 24 der Betätigungseinrichtung hindurch erstrecken kann. Die Betätigungseinrichtung besitzt somit vorzugsweise mindesten zwei in Breitenrichtung der Tür 6 voneinander beabstandete Schwenkhebel 24, die gleichzeitig als Trag- oder Stützstruktur für das bewegliche Türspalt-Abdeckelement 18 dienen. Die beiden Schwenkhebel 24 sind durch die gemeinsame Welle 22 miteinander verbunden (siehe auch Fig. 4). Insbesondere in Abhängigkeit der Türbreite kann auch eine größere Anzahl von Schwenkhebeln 24 vorgesehen sein.

Weil sich die Schwenkhebel 24, wie zuvor erwähnt, jeweils durch eine Durchgangsöffnung 26 in der Außenhaut 8 durch diese hindurch erstrecken, besitzt die Luftfahrzeugtür-Anordnung eine Dichtungseinrichtung, welche die Durchgangsöffnung 26 gegenüber der Außenseite und/oder der Innenseite der Tür 6 abdichtet. Flugzeuge mit Druckkabinen weisen im Flugbetrieb und insbesondere in größeren Flughöhen bekanntlich einen gegenüber der Außenatmosphäre höheren Kabineninnendruck auf. Damit es zu keinen Druckverlusten in der Kabine sowie einer unerwünschten Geräuschentwicklung an den Durchgangsöffnungen 26 kommt, ist folglich die besagte Dichtungseinrichtung vorgesehen. Obwohl die Dichtungseinrichtung in mindestens einer Ausführungsform der Erfindung direkt an den Durchgangsöffnungen 26 angebracht wird, ist für die Ausführungsform gemäß den Fig. 1 bis 3 eine andere Lösung bevorzugt.

Hierzu wird auf die Fig. 4 verwiesen, die eine schematische, perspektivische Draufsicht auf einen oberen Teilbereich der erfindungsgemäßen Luftfahrzeugtür-Anordnung von Fig. 1 bis 3 in einer Blickrichtung entsprechend dem Pfeil III in Fig. 1 zeigt.

Wie aus der Fig. 4 ersichtlich ist, ist die Betätigungseinrichtung mit ihren Schwenkhebeln 24 zumindest teilweise in einem innerhalb der Türstruktur vorgesehenen druckdichten Raum 34 angeordnet ist, der zumindest gegenüber der Türinnenseite und damit auch gegenüber dem Inneren der Druckkabine abgedichtet ist. In diesem Beispiel ist für jeden Schwenkhebel 24 ein druckdichter Raum 34 vorgesehen, in dem sich zumindest der erste Schwenkhebelabschnitt 24a und ein Teil des zweiten Schwenkhebelabschnitts 24b befinden. Der druckdichte Raum 34 ist durch die Außenhaut 8, zwei benachbarte Spantsegmente 36 der Türstruktur und einen Deckel 38 begrenzt, der die Spantsegmente 36 zur Türinnenseite hin verschließt. Die Durchgangsöffnung 26, durch die sich ein Teil des zweiten Schwenkhebelabschnitts 24b nach außen zum Türspalt-Abdeckelement 18 erstreckt, mündet in diesen druckdichten Raum 34. Die Welle 22, welche die gemeinsame Schwenkachse A der Schwenkhebel 24 bildet, ist jeweils in einer Öffnung 36a in den zwei benachbarten Spantsegmenten 36 gelagert. In der Fig. 4 ragt das rechte Ende der Welle 22 aus dem druckdichten Raum 34 heraus und erstreckt sich zu dem benachbarten zweiten Schwenkhebel 24 und in dessen druckdichten Raum 34 hinein (nicht gezeigt). Dort ist die Welle 22 wieder auf gleiche Weise gelagert. Die Lagerung der Welle 22 bzw. die für die Lagerung vorgesehene Öffnung 36a im Spantsegment 36 ist zur Außenseite des druckdichten Raumes hin (d.h. hier zur Kabineninnenseite hin) mit Dichtringen abgedichtet. Da, wie schon erwähnt, auch die jeweilige Durchgangsöffnung 26 in den druckdichten Raum 34 mündet, ist für die Durchgangsöffnung 26 grundsätzlich keine weitere Dichtungseinrichtung mehr erforderlich. Sie kann jedoch selbstverständlich optional vorgesehen werden.

In einer Ausführungsform der Erfindung ist es auch vorgesehen, mindestens ein Ende der Welle 22 in einer vollständig innerhalb des druckdichten Raums 34 angeordneten Lagereinrichtung zu lagern. Diese Lagereinrichtung kann z.B. an der Innenseite eines Spantsegmentes 36 oder innerhalb einer topfartigen Einbuchtung oder Ausbuchtung des Spantsegments 36 befestigt sein. An dieser Stelle existiert somit keine Öffnung mehr zur Außenseite des druckdichten Raumes 34, und diese Stelle muss folglich nicht separat abgedichtet werden.

Es ist zu beachten, dass das bewegliche Türspalt-Abdeckelement 18 der erfindungsgemäßen Luftfahrzeugtür-Anordnung in jeder Betriebsposition allseitig von der außerhalb des Rumpfes 2 bzw. außerhalb der Tür 6 vorherrschenden Außenatmosphäre umgeben ist. Auch wenn der Rumpf 2, wie in diesem Beispiel, mit einer Druckkabine ausgestattet ist, wird das bewegliche Türspalt-Abdeckelement 18 also niemals von dem Kabineninnendruck, sondern nur allseitig von dem Druck der Umgebungsatmosphäre beaufschlagt. Das Türspalt-Abdeckelement 18 wird deshalb nur relativ gering belastet und kann folglich sehr leicht und dennoch stabil und hochfest ausgestaltet werden.

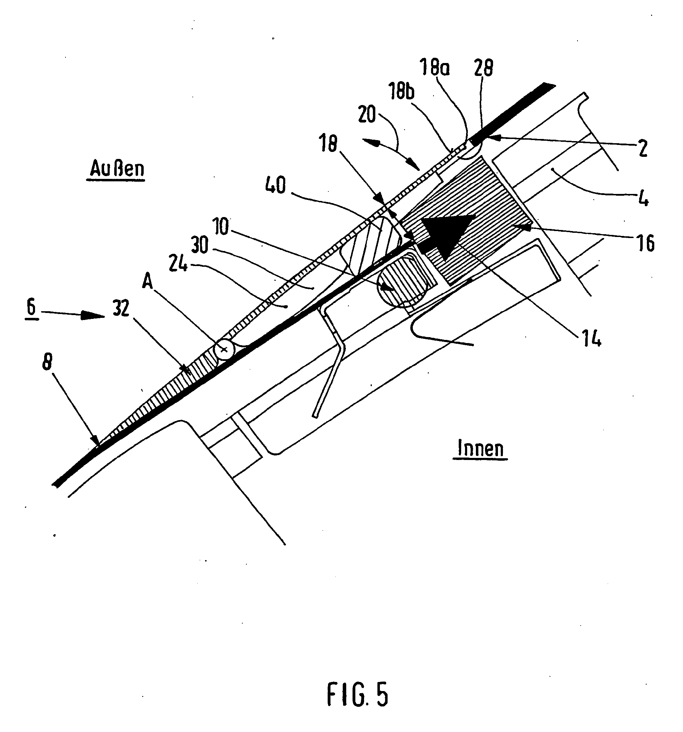

Fig. 5 zeigt eine schematische Längsschnittansicht durch eine erfindungsgemäße Luftfahrzeugtür-Anordnung gemäß einer zweiten Ausführungsform. Der Aufbau der Tür 6 und des beweglichen Türspalt-Abdeckelementes 18 entspricht weitgehend der ersten Ausführungsform. Anders als diese ist besitzt sie jedoch keine sich durch die Außenhaut 8 erstreckende Schwenkhebel, die mit einer die Schwenkachse der Schwenkhebel bildenden Welle der Verriegelungseinrichtung gekoppelt sind. Statt dessen ist bei der Variante nach Fig. 5 eine unabhängige Schwenkachse A außerhalb der Tür 6 und oberhalb der Außenseite der Außenhaut 8 angeordnet. Um diese Schwenkachse A ist das bewegliche Türspalt-Abdeckelementes 18 zwischen der ersten und zweiten Abdeckelement-Position verschwenkbar.

Darüber hinaus ist bei der Variante nach Fig. 5 die Betätigungseinrichtung in einem Bereich (d.h. in dem Einbauraum 30) zwischen der Außenseite der Außenhaut 8 der Tür 6 und einer der Außenhaut 8 zugewandten Innenseite des beweglichen Türspalt-Abdeckelements 18 angeordnet. Die Betätigungseinrichtung besitzt mindestens einen an der Tür 6 (hier der Außenhaut 8 der Tür 6) und dem Türspalt-Abdeckelement 18 angreifenden Aktuator 40, der das Türspalt-Abdeckelement 18 bewegt. Bei dem Aktuator 40 kann es sich z.B. um eine mechanische, magnetische, elektrische, elektromechanische, elektromagnetische, elektrostriktive, insbesondere piezoelektrische, magnetostriktive, hydraulische oder pneumatische Stelleinrichtung oder eine Mischform aus den zuvor genannten Stelleinrichtungstypen handeln. Der Aktuator 40 kann bei Bedarf zusätzlich mit einer Getriebeeinrichtung gekoppelt sein. In mindestens einer Ausführungsform kann der Aktuator 40 auch berührungslos wirken.

Die Ausführungsform nach Fig. 5 besitzt den Vorteil, dass sie für die Betätigungseinrichtung keine Durchgangsöffnungen in der Außenhaut 8 und entsprechende Dichtungseinrichtungen benötigt. In der Regel werden nur Energieversorgungs-Leitungen, Steuer- und/oder Kontroll- und/oder Sensor-Leitungen zum Aktuator 40 und/oder dem Türspalt-Abdeckelement 18 durch die Außenhaut 8 geführt werden müssen. Diese Durchführungen enthalten jedoch keine beweglichen Elemente, so dass die Abdichtung einfach zu realisieren ist.

Wie schon erwähnt, besitzt bei der Ausführungsform nach Fig. 5 die Betätigungseinrichtung bzw. deren Aktuator 40 keine mechanische Kopplung mehr zu der Verriegelungseinrichtung bzw. deren Verriegelungsmechanismus, welche die Bewegung des Türspalt-Abdeckelementes 18 mit dem Anheben/Entriegeln bzw. Ansenken/Verriegeln der Tür 6 entsprechend synchronisiert und verhindert, dass der obere Rand 18a des Türspalt-Abdeckelementes 18 gegen den Türrahmen 4 bzw. den Rumpf 2 stößt. Aus diesem Grund ist der Aktuator 40 der Luftfahrzeugtür-Anordnung von Fig. 5 mit einer Kontrolleinrichtung (nicht gezeigt) gekoppelt, die wiederum mit der Verriegelungseinrichtung und/oder einem geeigneten Sensor verbunden ist, welcher ein Tür-Steuersignal liefert, das den jeweiligen Betriebszustand der Tür 6 und ihrer Verriegelungseinrichtung repräsentiert. Auf Grundlage dieses Tür-Steuersignals liefert die Kontrolleinrichtung an den Aktuator 40 dann ein geeignetes Aktuator-Steuersignal. Dieses Aktuator-Steuersignal stellt sicher, dass die Betätigung des Aktuators 40 und damit des Türspalt-Abdeckelementes 18 in Abhängigkeit der Betätigung der Verriegelungseinrichtung kontrolliert und mit der Betätigung der Verriegelungseinrichtung und dem Anheben bzw. Absenken der Tür 6 entsprechend synchronisiert erfolgt.

Die Kontrolleinrichtung kann entweder vollständig in die Tür 6 integriert sein oder sich auch teilweise oder vollständig, z.B. über eine Schnittstelle hinweg, außerhalb der Tür 6 befinden, z.B. in oder an einem Türrahmenbereich oder auch an einer anderen geeigneten Position im oder am Rumpf 2.

Zudem können das Türspalt-Abdeckelement 18 und/oder dessen Betätigungseinrichtung mit einem Sensor ausgestattet sein, welcher ein den Betriebszustand des Türspalt-Abdeckelementes 18 oder dessen Aktuator 40 repräsentierendes Zustands-Signal an die Kontrolleinrichtung liefert. Die Kontrolleinrichtung wiederum kann mit mindestens einer Ausgangsleitung ausgestattet sein, über welche das Zustands-Signal und/oder das Tür-Steuersignal an eine Anzeigeeinrichtung oder ein Bedienungseinrichtung lieferbar ist, die z.B. an der Tür 6, am Türrahmen 4, einem Rumpfbereich oder im Cockpit des Luftfahrzeugs angeordnet ist.

Die Ausführungsform nach Fig. 5 eignet sich besonders für Luftfahrzeugtür-Anordnungen, bei denen die Türsteuerung (Entriegeln, Anheben, Öffnen, Schließen, Absenken, Verriegeln) und die Steuerung der Betätigungseinrichtung des Türspalt-Abdeckelementes 18 bzw. eine Regelung dieser Komponenten elektrisch bzw. elektronisch erfolgt.

Die Erfindung ist nicht auf die obigen Ausführungsbeispiele beschränkt. Im Rahmen des Schutzumfangs der Ansprüche kann die erfindungsgemäße Luftfahrzeugtür-Anordnung vielmehr auch andere als die zuvor beschriebenen Ausgestaltungsformen annehmen. Insbesondere kann das bewegliche Türspalt-Abdeckelement 18 auch mehrere nebeneinander angeordnete, bewegliche Türspalt-Einzel-Abdeckelemente besitzen, die sich in der ersten Abdeckelement-Position P1 zudem teilweise überlappen können. Die Schwenkachse A des beweglichen Türspalt-Abdeckelementes 18 kann auch so positioniert sein, dass sie innerhalb der Außenhaut 8 liegt. Dies ist z.B. dadurch erzielbar, dass die Schwenkachse A in entsprechenden Einbuchtungen in der Außenhaut 8 angeordnet wird.

Obwohl das bewegliche Türspalt-Abdeckelement 18 in den oben erläuterten bevorzugten Ausführungsformen nur rotatorisch bewegt wurde, ist es ebenso im Sinne der Erfindung möglich, das Türspalt-Abdeckelement 18 nur translatorisch zu bewegen oder auch in einer Kombination aus einer rotatorischen und translatorischen Bewegung. Hierzu sind dann entsprechend geeignete Kinematiken vorzusehen. Das Türspalt-Abdeckelement 18 kann auch funktional mit einer Hub- und Absenkeinrichtung der Tür gekoppelt sein, falls diese Hub- und Absenkeinrichtung nicht bereits per se mit der Verriegelungseinrichtung der Tür gekoppelt ist.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnet:
- 2: Rumpf
- 4: Türrahmen
- 6: Tür
- 6a: Oberer Türrand
- 6b: Nach innen versetzter Türrandbereich
- 8: Außenhaut von 6
- 10: Umlaufende Türdichtung
- 12: Anlagefläche
- 14: Hubrichtung
- 16: Türspalt
- 18: Bewegliches Türspalt-Abdeckelement
- 18a: Oberer Rand von 18
- 18b: Oberer Randbereich von 18
- 18c: Unterer Randbereich von 18
- 20: Bewegungsrichtung von 18
- 22: Welle einer Tür-Verriegelungseinrichtung
- 24: Schwenkhebel
- 24a: Erster Schwenkhebelabschnitt
- 24b: Zweiter Schwenkhebelabschnitt
- 24c: Dritter Schwenkhebelabschnitt
- 26: Durchgangsöffnung in 8
- 28: Einbuchtung
- 30: Einbauraum
- 30a: Zwischenraum
- 32: Keilförmiges Verkleidungselement
- 34: Druckdichter Raum
- 36: Spantsegmente
- 36a: Öffnung für Lagerung der Welle 22
- 38: Deckel
- 40: Aktuator

- 200: Rumpf
- 202: Türrahmen
- 204: Luftfahrzeugtür
- 205: Hubrichtung
- 206: Außenhaut
- 208: Türspalt
- 210: Oberer Türrand
- 212: Türspalt-Abdeckelement
- 214: Aerodynamisch ungünstige Kante
- 216: Rand von 212

- A: Drehachse von 22 und gleichzeitig Schwenkachse von 24
- D: Dicke der Tür 6
- H_{E}: Mittlere lichte Höhe des Einbauraums 30
- H_{S}: Türspalthöhe
- L: Länge von 18 in Höhenrichtung der Tür 6

- P1: Erste Abdeckelement-Position
- P2: Zweite Abdeckelement-Position

## Patentansprüche

1. Luftfahrzeugtür-Anordnung für ein Luftfahrzeug, welches über einen Rumpf (2) mit einer Türöffnung verfügt, umfassend einen Türrahmen (4), der die Türöffnung umgibt, und eine in dem Türrahmen (4) anbringbare Luftfahrzeugtür (6), insbesondere eine Passagiertür, die
- eine Türstruktur mit einer Außenhaut (8) besitzt;
- ausgehend von einer verriegelten Schließlage in eine entriegelte Schließlage anhebbar und von dort aus in eine außerhalb des Türrahmens (4) und des Rumpfes (2) befindliche Öffnungslage schwenkbar ist; und
- ausgehend von der Öffnungslage zurück in die entriegelte Schließlage schwenkbar und von dort aus in die verriegelte Schließlage absenkbar ist;
- wobei in der verriegelten Schließlage ein Türspalt (16) zwischen dem Türrahmen (4) und einem Türrand (6a) vorhanden ist, der einen Raum für das Anheben und Absenken der Tür (6) definiert; und
- die Luftfahrzeugtür (6) an ihrer Außenseite und an einem dem Türrahmen (4) zugeordneten Türrandbereich (6b) ein plattenförmig ausgebildetes Türspalt-Abdeckelement (18) besitzt, das in jeder Betriebsposition allseitig von der außerhalb des Rumpfes (2) vorherrschenden Außenatmosphäre umgeben ist und welches sich in der verriegelten Schließlage über den Türspalt (16) erstreckt und den Türspalt (16) abdeckt;
**dadurch gekennzeichnet, dass**
- das Türspalt-Abdeckelement (18) relativ zur Außenseite der Außenhaut (8) beweglich (20) an der Türstruktur befestigt ist, und
- eine Außenseite des beweglichen Türspalt-Abdeckungselements (18) in der verriegelten Schließlage der Tür (6) in eine mit einer Außenkontur des Rumpfes (2) und einer Außenkontur der Tür (6) bündige Position bringbar ist..

2. Luftfahrzeugtür-Anordnung nach Anspruch 1,
**dadurch gekennzeichnet, dass**
das bewegliche Türspalt-Abdeckelement (18) ausgehend von einer ersten Abdeckelement-Position (P1) und einem Zustand, in der sich die Tür (6) in der verriegelten Schließlage befindet, von der Außenseite der Außenhaut (8) weg in eine zweite Abdeckelement-Position (P2) beweglich ist, so dass die Tür (6) dann zum Entriegeln anhebbar ist; und
das bewegliche Türspalt-Abdeckelement (18) ausgehend von der zweiten Abdeckelement-Position (P2) und einem Zustand, in der sich die Tür (6) in der entriegelten Schließlage befindet, zu der Außenseite der Außenhaut (8) hin in die erste Abdeckelement-Position (P1) beweglich ist, so dass die Tür (6) dann zum Verriegeln absenkbar ist.

3. Luftfahrzeugtür-Anordnung nach einem oder mehreren der vorher genannten Ansprüche,
**dadurch gekennzeichnet, dass**
diese eine Betätigungseinrichtung (22; 24; 40) zum Bewegen des beweglichen Türspalt-Abdeckelements (18) besitzt.

4. Luftfahrzeugtür-Anordnung nach dem Anspruch 3,
**dadurch gekennzeichnet, dass**
die Betätigungseinrichtung (40) in einem einen Einbauraum (30; 30a) definierenden Bereich zwischen der Außenseite der Außenhaut (8) der Tür (6) und einer der Außenhaut (8) zugewandten Innenseite des beweglichen Türspalt-Abdeckelements(18) angeordnet ist.

5. Luftfahrzeugtür-Anordnung nach dem Anspruch 3 oder 4,
**dadurch gekennzeichnet, dass**
die Betätigungseinrichtung (22; 24) zumindest teilweise innerhalb der Türstruktur angeordnet ist.

6. Luftfahrzeugtür-Anordnung nach einem oder mehreren der Ansprüche 3 bis 5,
**dadurch gekennzeichnet, dass**
die Betätigungseinrichtung (24) funktional mit einer Verriegelungseinrichtung (22) zum Verriegeln und Entriegeln der Tür (6) gekoppelt ist.

7. Luftfahrzeugtür-Anordnung nach Anspruch 6,
**dadurch gekennzeichnet, dass**
das bewegliche Türspalt-Abdeckungselement (18) mit der funktional mit der Verriegelungseinrichtung (22) gekoppelten Betätigungseinrichtung (24)
vor oder beim Entriegeln der Tür (6) in die zweite Abdeckelement-Position (P2) bewegbar ist, und
beim oder nach dem Verriegeln der Tür in die erste Abdeckelement-Position (P1) bewegbar ist.

8. Luftfahrzeugtür-Anordnung nach einem der Ansprüche 6 oder 7,
**dadurch gekennzeichnet, dass**
ein Teil (22) der Verriegelungseinrichtung zumindest einen Teil der Betätigungseinrichtung bildet.

9. Luftfahrzeugtür-Anordnung nach einem oder mehreren der Ansprüche 3 bis 8,
**dadurch gekennzeichnet, dass**
die Betätigungseinrichtung ein an dem beweglichen Türspalt-Abdeckelement (18) angreifendes Betätigungselement (24; 40) besitzt, mit welchem das bewegliche Türspalt-Abdeckelement (18) bewegbar ist.

10. Luftfahrzeugtür-Anordnung nach Anspruch 9,
**dadurch gekennzeichnet, dass**
das Betätigungselement (24) eine Trag- oder Stützstruktur für das bewegliche Türspalt-Abdeckelement (18) bildet.

11. Luftfahrzeugtür-Anordnung nach einem der Ansprüche 9 oder 10,
**dadurch gekennzeichnet, dass**
das bewegliche Türspalt-Abdeckelement (18) als ein klappenartiges, um eine Schwenkachse (A) relativ zur Außenseite der Außenhaut (8) verschwenkbares Element ausgebildet ist, und
das Betätigungselement mindestens einen Schwenkhebel (24) aufweist.

12. Luftfahrzeugtür-Anordnung nach einem oder mehreren der Ansprüche 9 bis 11,
**dadurch gekennzeichnet, dass**
sich das Betätigungselement (24) von der Innenseite der Tür (6) her durch eine Durchgangsöffnung (26) in der Außenhaut (8) durch diese hindurch zum beweglichen Türspalt-Abdeckelement (18) erstreckt.

13. Luftfahrzeugtür-Anordnung nach Anspruch 12,
**dadurch gekennzeichnet, dass**
diese eine Dichtungseinrichtung (34) besitzt, welche die Durchgangsöffnung(26) gegenüber der Innenseite und/oder Außenseite der Tür (6) abdichtet.

14. Luftfahrzeugtür-Anordnung nach einem oder mehreren der Ansprüche 3 bis 13,
**dadurch gekennzeichnet, dass**
die Betätigungseinrichtung (24) zumindest teilweise (24a, 24b) in einem innerhalb der Türstruktur vorgesehenen druckdichten Raum angeordnet ist, der zumindest gegenüber der Innenseite der Tür (6) abgedichtet ist.

15. Luftfahrzeugtür-Anordnung nach einem oder mehreren der Ansprüche 3 bis 14,
**dadurch gekennzeichnet, dass**
diese eine mit der Betätigungseinrichtung koppelbare Kontrolleinrichtung zum Kontrollieren der Betätigungseinrichtung besitzt.

16. Luftfahrzeugtür-Anordnung nach einem oder mehreren der vorher genannten Ansprüche,
**dadurch gekennzeichnet, dass**
In einem Freiraum (30) zwischen einem der Tür (6) zugeordneten Randbereich (18c) des beweglichen Türspalt-Abdeckelements (18) und einem an diesen Randbereich (18c) angrenzenden Außenhautbereich der Tür (6) ein Verkleidungselement (32) vorgesehen ist, welches in diesem Freiraum (30) die vorbestimmte Soll-Außenkontuf der Tür (6) definiert.

17. Luftfahrzeugtür-Anordnung nach einem oder mehreren der vorher genannten Ansprüche,
**dadurch gekennzeichnet, dass**
das bewegliche Türspalt-Abdeckelement (18) mehrere nebeneinander angeordnete, bewegliche Türspalt-Einzel-Abdeckelemente besitzt.

18. Luftfahrzeugrumpf (2), insbesondere mit einer Druckkabine versehen, mit einer Türöffnung, die von einem Türrahmen (4) umgeben ist und mit einer in dem Türrahmen (4) anbringbaren Luftfahrzeugtür (6) versehen ist, umfassend eine Luftfahrzeugtür-Anordnung nach einem der Ansprüche 1 bis 17.

19. Luftfahrzeugrumpf (2) nach Anspruch 18,
**dadurch gekennzeichnet, dass**
der Flugzeugrumpf (2;4) an seiner Außenseite eine Einbuchtung (30) besitzt, in die in der verriegelten Schließposition der Tür (6) ein dem Türrahmen (4) zugeordneter Randbereich (18b) des beweglichen Türspalt-Abdeckelements (18) bündig mit der Soll-Außenkontur des Rumpfes (2) positionierbar ist.

20. Luftfahrzeugrumpf (2) nach einem oder mehreren der Ansprüche 18 bis 19,
**dadurch gekennzeichnet, dass**
diese bei Betrachtung in einem in Höhenrichtung der Tür (6) verlaufenden Längsschnitt einen dem Türspalt (16) zugeordneten Türrandbereich (6b) besitzt, in dem die Außenhaut (8) bezogen auf eine vorbestimmte Soll-Außenkontur (KS) der Tür (6) bzw. bezogen auf eine im Bereich der Tür (6) vorbestimmte Soll-Außenkontur des Flugzeugrumpfes (2) zur Türinnenseite hin versetzt ist, und
das bewegliche Türspalt-Abdeckelement (18) über diesem nach innen versetzten Türrandbereich (6b) angeordnet ist.

21. Luftfahrzeugrumpf (2) nach einem oder mehreren der Ansprüche 18 bis 20,
**dadurch gekennzeichnet, dass**
das zwischen der Innenseite des beweglichen Türspalt-Abdeckelements (18) und der Außenseite der in dem nach innen versetzten Türrandbereich (6a) befindlichen Bereiche der Außenhaut (8) ein Zwischenraum (30a) vorhanden ist.

## Claims

1. Aircraft door arrangement for an aircraft which possesses a fuselage (2) having a door opening, comprising a door frame (4), surrounding the door opening, and an aircraft door (6), in particular a passenger door, fittable in the door frame (4), which door
- possesses a door structure having an outer skin (8);
- proceeding from a locked closed position is liftable into an unlocked closed position, and is pivotable from there into an open position located outside the door frame (4) and the fuselage (2); and
- proceeding from the open position is pivotable back into the unlocked closed position, and is lowerable from there into the locked closed position;
- in the locked closed position, a door gap (16) being present between the door frame (4) and a door edge (6a), which gap defines a space for lifting and lowering the door (6); and
- the aircraft door (6) possessing, on its outer side and on a door edge region (6b) associated with the door frame (4), a panel-shaped door gap covering element (18) which is surrounded on all sides, in every operating position, by the external atmosphere that exists outside the fuselage (2) and which, in the locked closed position, extends over the door gap (16) and covers the door gap (16);
**characterised in that**
- the door gap covering element (18) is fastened onto the door structure movably (20) relative to the outer side of the outer skin (8), and
- an outer side of the movable door gap covering element (18) can be brought into a position flush with an outer contour of the fuselage (2) and an outer contour of the door (6) when the door (6) is in the locked closed position.

2. Aircraft door arrangement according to Claim 1,
**characterised in that**
proceeding from a first covering element position (P1) and a state in which the door (6) is in the locked closed position, the movable door gap covering element (18) is movable away from the outer side of the outer skin (8) into a second covering element position (P2), so that door (6) is then liftable for unlocking; and
proceeding from the second covering element position (P2) and a state in which the door (6) is in the unlocked closed position, the movable door gap covering element (18) is movable towards the outer side of the outer skin (8) into the first covering element position (P1), so that the door (6) is then lowerable for locking.

3. Aircraft door arrangement according to one or more of the preceding claims,
**characterised in that**
this arrangement possesses an actuation device (22; 24; 40) for moving the movable door gap covering element (18).

4. Aircraft door arrangement according to Claim 3,
**characterised in that**
the actuation device (40) is arranged in a region, defining an installation space (30; 30a), between the outer side of the outer skin (8) of the door (6) and an inner side, facing towards the outer skin (8), of the movable door gap covering element (18).

5. Aircraft door arrangement according to Claim 3 or 4,
**characterised in that**
the actuation device (22; 24) is arranged at least partly inside the door structure.

6. Aircraft door arrangement according to one or more of Claims 3 to 5,
**characterised in that**
the actuation device (24) is functionally coupled with a locking device (22) for locking and unlocking the door (6).

7. Aircraft door arrangement according to Claim 6, **characterised in that**
by the actuation device (24) functionally coupled with the locking device (22), the movable door gap covering element (18)
is movable into the second covering element position (P2) before or during the unlocking of the door (6), and
is movable into the first covering element position (P1) during or after the locking of the door.

8. Aircraft door arrangement according to one of Claims 6 or 7,
**characterised in that**
a part (22) of the locking device constitutes at least a part of the actuation device.

9. Aircraft door arrangement according to one or more of Claims 3 to 8,
**characterised in that**
the actuation device possesses an actuation element (24; 40) which engages on the movable door gap covering element (18) and by which the movable door gap covering element (18) is movable.

10. Aircraft door arrangement according to Claim 9,
**characterised in that**
the actuation element (24) constitutes a carrying or supporting structure for the movable door gap covering element (18).

11. Aircraft door arrangement according to one of Claims 9 or 10,
**characterised in that**
the movable door gap covering element (18) is embodied as a flap-like element pivotable relative to the outer side of the outer skin (8) about a pivot axis (A), and
the actuation element has at least one pivoting lever (24).

12. Aircraft door arrangement according to one or more of Claims 9 to 11,
**characterised in that**
the actuation element (24) extends from the inner side of the door (6) through the outer skin (8) through a pass-through opening (26) therein to the movable door gap covering element (18).

13. Aircraft door arrangement according to Claim 12,
**characterised in that**
this arrangement possesses a sealing device (34) which seals the pass-through opening (26) with respect to the inner side and/or outer side of the door (6).

14. Aircraft door arrangement according to one or more of Claims 3 to 13,
**characterised in that**
the actuation device (24) is arranged at least partly (24a, 24b) in a pressure-tight space that is provided inside the door structure and that is sealed at least with respect to the inner side of the door (6).

15. Aircraft door arrangement according to one or more of Claims 3 to 14,
**characterised in that**
this arrangement possesses a monitoring device couplable with the actuation device and serving to monitor the actuation device.

16. Aircraft door arrangement according to one or more of the preceding claims,
**characterised in that**
there is provided, in a clearance (30) between an edge region (18c), associated with the door (6), of the movable door gap covering element (18) and an outer skin region, contiguous with this edge region (18c), of the door (6), a fairing element (32) which defines the predetermined reference outer contour of the door (6) in this clearance (30).

17. Aircraft door arrangement according to one or more of the preceding claims,
**characterised in that**
the movable door gap covering element (18) possesses a plurality of movable individual door gap covering elements arranged next to one another.

18. Aircraft fuselage (2), in particular provided with a pressurised cabin, having a door opening surrounded by a door frame (4) and provided with an aircraft door (6) fittable in the door frame (4), comprising an aircraft door arrangement according to one of Claims 1 to 17.

19. Aircraft fuselage (2) according to Claim 18,
**characterised in that**
the fuselage (2;4) possesses on its outer side an indentation (30) into which, in the locked closed position of the door (6), an edge region (18b), associated with the door frame (4), of the movable door gap covering element (18) is positionable flush with the reference outer contour of the fuselage (2).

20. Aircraft fuselage (2) according to one or more of Claims 18 to 19,
**characterised in that**
this fuselage, when viewed in a longitudinal section extending in the height direction of the door (6), possesses a door edge region (6b) which is associated with the door gap (16) and in which the outer skin (8) is offset towards the inner side of the door with respect to a predetermined reference outer contour (KS) of the door (6) or with respect to a predetermined reference outer contour of the aircraft fuselage (2) in the region of the door (6), and
the movable door gap covering element (18) is arranged over this inwardly offset door edge region (6b).

21. Aircraft fuselage (2) according to one or more of Claims 18 to 20,
**characterised in that**
an interspace (30a) is present between the inner side of the movable door gap covering element (18) and the outer side of those regions of the outer skin (8) located in the inwardly offset door edge region (6b).

## Revendications

1. Ensemble porte d'aéronef conçu pour un aéronef pourvu d'un fuselage (2) comportant une ouverture de porte, comprenant un cadre de porte (4), qui entoure l'ouverture de porte, et une porte d'aéronef (6) qui peut être montée dans le cadre de porte (4), notamment une porte pour les passagers, qui :
- comprend une structure de porte comportant une enveloppe (8),
- peut être levée d'une position fermée verrouillée vers une position fermée déverrouillée et pivotée vers une position ouverte en dehors du cadre de porte (4) et du fuselage (2), et
- peut être pivotée pour passer de cette position ouverte vers la position fermée déverrouillée et baissée vers la position fermée verrouillée,
- un interstice de porte (16) qui définit un espace pour lever et baisser la porte (6) entre le cadre de porte (4) et un bord de porte (6a) étant ménagé dans la position fermée verrouillée, et
- la porte d'aéronef comprend sur sa face externe et sur une zone de bord de porte (6b) affectée au cadre de porte (4) un élément de recouvrement d'interstice de porte (18), qui est entouré dans chaque position de service de tous côtés par l'atmosphère extérieure prédominante à l'extérieur du fuselage (2) et qui s'étend dans la position fermée verrouillée au-delà de l'interstice de porte (16) et recouvre l'interstice (16),
**caractérisé en ce que**
- l'élément de recouvrement d'interstice de porte (18) est fixé sur la structure de la porte de manière à pouvoir être déplacé (20) par rapport à la face externe de l'enveloppe (8), et
- une face externe de élément de recouvrement d'interstice de porte (18) pouvant être déplacé peut être amenée, en position fermée verrouillée de la porte (6), dans une position à fleur du contour extérieur du fuselage (2) et du contour extérieur de la porte (6).

2. Ensemble porte d'aéronef selon la revendication 1,
**caractérisé en ce que**
l'élément de recouvrement d'interstice de porte (18) mobile peut être déplacé d'une première position d'élément de recouvrement (P1) et d'un état dans lequel la porte (6) se trouve dans la position fermée verrouillée, en s'éloignant de la face externe de l'enveloppe (8) pour se placer dans une seconde position d'élément de recouvrement (P2), de telle sorte que la porte (6) peut ensuite être levée pour être déverrouillée, et
l'élément de recouvrement d'interstice de porte (18) mobile peut être déplacé de la seconde position d'élément de recouvrement (P2) et d'un état dans lequel la porte (6) se trouve en position fermée déverrouillée, vers la face externe de l'enveloppe (8) pour se placer dans la première position d'élément de recouvrement (P1), de telle sorte que la porte (6) peut ensuite être abaissée pour être verrouillée.

3. Ensemble porte d'aéronef selon l'une ou plusieurs des revendications précédentes, **caractérisé en ce que**
celui-ci possède un mécanisme d'actionnement (22, 24,40) destiné à déplacer l'élément de recouvrement d'interstice de porte (18).

4. Ensemble porte d'aéronef selon la revendication 3,
**caractérisé en ce que**
le mécanisme d'actionnement (40) est disposé dans une zone définissant un logement (30, 30a) entre la face externe de l'enveloppe (8) de la porte (6) et une face interne de l'élément de recouvrement d'interstice de porte mobile (18) tournée vers l'enveloppe (8).

5. Ensemble porte d'aéronef selon la revendication 3 ou 4,
**caractérisé en ce que**
le mécanisme d'actionnement (22, 24) est disposé au moins en partie à l'intérieur de la structure de la porte.

6. Ensemble porte d'aéronef selon une ou plusieurs des revendications 3 à 5, **caractérisé en ce que**
le mécanisme d'actionnement (24) est accouplé fonctionnellement à un mécanisme de verrouillage (22) destiné à verrouiller et déverrouiller la porte (6).

7. Ensemble porte d'aéronef selon la revendication 6,
**caractérisé en ce que**
l'élément de recouvrement d'interstice de porte mobile (18) peut être déplacé avec le mécanisme d'actionnement (24) accouplé fonctionnellement au mécanisme de verrouillage (22)
avant ou pendant le déverrouillage de la porte (6) dans la seconde position d'élément de recouvrement (P2), et
peut être déplacé pendant et après le verrouillage de la porte dans la première position d'élément de recouvrement (P1).

8. Ensemble porte d'aéronef selon l'une des revendications 6 ou 7,
**caractérisé en ce que**
une partie (22) du mécanisme de verrouillage forme au moins une partie du mécanisme d'actionnement.

9. Ensemble porte d'aéronef selon une ou plusieurs des revendications 3 à 8, **caractérisé en ce que**
le mécanisme d'actionnement comporte un élément d'actionnement (24, 40) engageant l'élément de recouvrement d'interstice de porte mobile (18), avec lequel l'élément de recouvrement d'interstice de porte mobile (18) peut être déplacé.

10. Ensemble porte d'aéronef selon la revendication 9,
**caractérisé en ce que**
l'élément d'actionnement (24) forme une structure de support ou de soutien de l'élément de recouvrement d'interstice de porte mobile (18).

11. Ensemble porte d'aéronef selon l'une des revendications 9 ou 10,
**caractérisé en ce que**
l'élément de recouvrement d'interstice de porte mobile (18) est construit sous forme d'un élément en forme de rabat, pivotable par rapport à la face externe de l'enveloppe (8) autour d'un axe de pivotement (A), et
l'élément d'actionnement comprend au moins un levier de pivotement (24).

12. Ensemble porte d'aéronef selon une ou plusieurs des revendications 9 à 11,
**caractérisé en ce que**
l'élément d'actionnement (24) s'étend de la face interne de la porte (6) au travers d'une ouverture de passage (26) dans l'enveloppe (8) en traversant celle-ci jusqu'à l'élément de recouvrement d'interstice de porte mobile (18).

13. Ensemble porte d'aéronef selon la revendication 12,
**caractérisé en ce que**
celui-ci comporte un dispositif d'étanchéité (34), qui rend étanche l'ouverture de passage (26) vis-à-vis de la face intérieure et/ou de la face extérieure de la porte (6).

14. Ensemble porte d'aéronef selon une ou plusieurs des revendications 3 à 13,
**caractérisé en ce que**
le mécanisme d'actionnement (24) est disposé au moins en partie (24a, 24b) dans un espace étanche à la pression prévu à l'intérieur de la structure de la porte, qui est rendu étanche au moins vis-à-vis de la face intérieure de la porte (6).

15. Ensemble porte d'aéronef selon une ou plusieurs des revendications 3 à 14,
**caractérisé en ce que**
celui-ci comporte un dispositif de contrôle pouvant être couplé au mécanisme d'actionnement et destiné à contrôler le mécanisme d'actionnement.

16. Ensemble porte d'aéronef selon une ou plusieurs des revendications précédentes,
**caractérisé en ce que**,
dans un espace intercalaire (30) entre une zone de bord (18c) de l'élément de recouvrement d'interstice de porte mobile (18) affectée à la porte (6) et une zone d'enveloppe de la porte (6) attenante à cette zone de bord (18c), un élément de garnissage (32) est prévu, lequel définit dans cet espace intercalaire (30) le contour extérieur nominal prédéfini de la porte (6).

17. Ensemble porte d'aéronef selon une ou plusieurs des revendications précédentes,
**caractérisé en ce que**
l'élément de recouvrement d'interstice de porte mobile (18) comporte plusieurs éléments de recouvrement individuels d'interstice de porte mobiles, disposés l'un à côté de l'autre.

18. Fuselage d'aéronef (2), notamment pourvu d'une cabine pressurisée, comportant une baie de porte, qui est entourée d'un cadre de porte (4) et est pourvue d'une porte d'aéronef (6) pouvant être montée dans le cadre de porte (4), comprenant un ensemble porte d'aéronef selon l'une quelconque des revendications 1 à 17.

19. Fuselage d'aéronef (2) selon la revendication 18,
**caractérisé en ce que**
le fuselage d'aéronef (2,4) comporte sur sa face externe un creux (30), dans lequel, en position fermée verrouillée de la porte (6), une zone limite (18b) de l'élément de recouvrement d'interstice de porte mobile (18) affectée au cadre de porte (4) peut être positionnée en affleurement avec le contour extérieur nominal du fuselage (2).

20. Fuselage d'aéronef (2) selon une ou plusieurs des revendications 18 à 19,
**caractérisé en ce que**
en considérant le profil longitudinal dans le sens de la hauteur de la porte (6), celle-ci comporte une zone de bord de porte (6b) affectée à l'interstice de porte (16), dans laquelle l'enveloppe (8) est décalée vers la face intérieure de la porte, en se rapportant à un contour extérieur nominal prédéterminé (KS) de la porte (6) ou à un contour extérieur nominal prédéterminé du fuselage dans la zone de la porte (6), et
l'élément de recouvrement d'interstice de porte mobile (18) est disposé au-dessus et au-delà de cette zone de bord de porte (6b) décalée vers l'intérieur.

21. Fuselage d'aéronef (2) selon une ou plusieurs des revendications 18 à 20,
**caractérisé en ce**
**qu'**un espacement (30a) est ménagé entre la face intérieure de l'élément de recouvrement d'interstice de porte mobile (18) et la face extérieure des zones de l'enveloppe (8) se trouvant dans la zone de bord de porte décalée vers l'intérieur.
